Europäisches Patentamt

European Patent Office

Office européen des brevets

(19)

(11) Veröffentlichungsnummer: **0 182 424**

**B1**

(12) **EUROPÄISCHE PATENTSCHRIFT**

(45) Veröffentlichungstag der Patentschrift: 12.09.90

(51) Int. Cl.⁵: **G 11 B 15/675**

(21) Anmeldenummer: 85201820.9

(22) Anmeldetag: 08.11.85

(54) Aufzeichnungs- und/oder Wiedergabegerät.

(30) Priorität: 15.11.84 AT 3619/84

(43) Veröffentlichungstag der Anmeldung:
28.05.86 Patentblatt 86/22

(45) Bekanntmachung des Hinweises auf die
Patenterteilung:
12.09.90 Patentblatt 90/37

(84) Benannte Vertragsstaaten:
DE FR GB

(56) Entgegenhaltungen:
EP-A-0 129 185
DE-A-3 238 510

PATENT ABSTRACTS OF JAPAN, Band 8, Nr.
183 (P-296)1620r, 23. August 1984; & JP-A-59 72
671

PATENT ABSTRACTS OF JAPAN, Band 7, Nr.
105 (P-195)1250r, 7. Mai 1983; & JP-A-58 26 360

(73) Patentinhaber: N.V. Philips'
Gloeilampenfabrieken
Groenewoudseweg 1
NL-5621 BA Eindhoven (NL)

(72) Erfinder: Fröschl, Kurt
p/A INT. OCTROOIBUREAU B.V. Prof. Holstlaan
6
NL-5656 AA Eindhoven (NL)
Erfinder: Jäger, Lothar
p/A INT. OCTROOIBUREAU B.V. Prof. Holstlaan
6
NL-5656 AA Eindhoven (NL)

(74) Vertreter: Schrijnemaekers, Hubert Joannes
Maria et al
Internationaal Octrooibureau B.V. Prof.
Holstlaan 6
NL-5656 AA Eindhoven (NL)

(56) Entgegenhaltungen:
PATENT ABSTRACTS OF JAPAN, Band 9, Nr. 54
(P-340)1777r, 8. März 1985; & JP-A-59 191 167
(HITACHI SEISAKUSHO K.K.) 30-10-1984

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Aufzeichnungs- und/oder Wiedergabegerät für einen in einer Kassette untergebrachten Aufzeichnungsträger mit einer Kassettenaufnahme, in die eine Kassette in einer Einschubrichtung händisch einschiebbar ist und die mindestens einen zumindest teilweise in der Einschubrichtung von einer Ausgangslage in eine Betriebslage verstellbaren Träger zum Galten einer Kassette aufweist, mit dem im wesentlichen in seiner Ausgangslage eine Kassette beim händischen Einschieben derselben bis in eine durch mindestens einen Kopplungsanschlag am Träger festgelegte Einschublage koppelbar ist und der zu seiner Verstellung und der mit ihm gekoppelten Kassette über eine Stift-Langloch-Verbindung mit einem verschwenkbaren Antriebshebel in Antriebsverbindung steht, der seinerseits über ein Getriebe von einem Motor her antreibbar ist, wobei beim motorischen Antreiben des Antriebshebels zum Verstellen des Trägers von seiner Ausgangslage in seine Betriebslage eine der beiden Längswände des Langloches der Stift-Langloch-Verbindung mit dem Stift derselben zusammenwirkt.

Ein solches Gerät ist beispielsweise aus der DE-OS 32 38 510 bekannt. Bei dem bekannten Gerät stützt sich beim Koppeln einer Kassette mit dem Träger beim händischen Einschieben derselben bis in ihre Einschublage, die durch zwei Kopplungsanschläge am Träger festgelegt ist, der am Träger vorgesehene Stift der Stift-Langloch-Verbindung an der in der Einschubrichtung vorne liegenden Längswand des im Antriebshebel vorgesehenen Langloches ab, wobei die beim Koppeln der Kassette mit dem Träger auftretenden Kräfte von dem Träger über die Stift-Langloch-Verbindung auf den Antriebshebel und von diesem auf das Getriebe übertragen werden, wobei diese auf das Getriebe einwirkenden Kräfte relativ gross sein können. Im normalen Betriebsfall wird nach Erfassung der Anwesenheit einer händisch vollständig bis in die durch die beiden Kopplungsanschläge festgelegte Einschublage eingeschoben, mit dem Träger gekoppelte Kassette in der Kassettenaufnahme der Motor selbsttätig eingeschaltet und über das Getriebe, den Antriebshebel und die Stift-Langloch-Verbindung der Träger zum motorischen Einziehen der mit ihm gekoppelten, bis zu den Kopplungsanschlägen am Träger eingeschobenen Kassette in die Kassettenaufnahme verstellt. Wenn aber der Benützer des Gerätes vor dem händischen Einschieben einer Kassette in die Kassettenaufnahme vergessen hat, das Gerät einzuschalten, dann unterbleibt das vorerwähnte selbsttätige Einschalten des Motors nach dem händischen Einschieben der Kassette, wobei dann der Benützer meistens versucht, durch wiederholtes, häufig immer heftigeres Nachdrücken auf die Kassette den erwünschten Vorgang des motorischen Einziehens der Kassette in die Kassettenaufnahme zu erreichen. Hierbei werden von der händisch belasteten Kassette über die beiden Kopplungsanschläge am Träger, den Träger und den mit diesem über die Stift-Langloch-Verbindung in Antriebsverbindung stehenden Antriebshebel auf das Getriebe ebenfalls relativ grosse Kräfte ausgeübt. Um solche Kräfte aufnehmen zu können, kann das Getriebe dementsprechend stark dimensioniert werden, was aber einen relativ grossen Raumbedarf und hohe Kosten erfordert, weshalb man bestrebt ist, das Getriebe möglichst schwach zu dimensionieren, wobei dann aber die Gefahr einer Deformierung und Beschädigung der Getriebeteile besteht.

Die Erfindung hat sich zur Aufgabe gestellt, die vorstehend angeführten Schwierigkeiten zu vermeiden und ein Gerät der eingangs angeführten Gattung so auszubilden, dass beim Koppeln einer Kassette mit dem Träger beim händischen Einschieben derselben in die Kassettenaufnahme das Getriebe vor grossen Kräftebelastungen geschützt ist, und zwar auch dann, wenn der Benützer des Gerätes irrtümlich vergessen hat, das Gerät einzuschalten. Hierfür ist die Erfindung dadurch gekennzeichnet, dass das Langloch in der Längswand, die der beim motorischen Antreiben des Antriebshebels zum Verstellen des Trägers von seiner Ausgangslage in seine Betriebslage mit dem Stift zusammenwirkenden Längswand gegenüberliegt, eine im wesentlichen in der Einschubrichtung verlaufende Vertiefung aufweist und bei seiner Ausgangslage befindlichem Träger die Vertiefung und der Stift in der Einschubrichtung einander gegenüber liegen, wobei beim Koppeln einer Kassette mit dem Träger beim händischen Einschieben derselben bis in ihre Einschublage der Stift in die Vertiefung eintritt und sich zur Bildung einer lösbaren Klemmverbindung mit einem Wandabschnitt derselben zur Blockierung einer Schwenkbewegung des Antriebshebels verklemmt. Dadurch, dass beim Koppeln einer Kassette mit dem Träger beim händischen Einschieben derselben in die Kassettenaufnahme der Stift und der Wandabschnitt der Vertiefung des Langloches sich selbsttätig miteinander verklemmen, ist der Antriebshebel gegen Verschwenken blockiert. Die hierbei von der händisch belasteten Kassette über den Kopplungsanschlag am Träger, den Träger und die Stift-Langloch-Verbindung auf den Antriebshebel übertragenen Kräfte werden daher von dem gegen Verschwenken blockierten Antriebshebel aufgenommen, so dass auf das Getriebe vorteilhafterweise keine Kräfte weitergeleitet werden. Das Getriebe ist somit in besonders einfacher und sicherer Weise vor Uberlastungen geschützt, und zwar auch dann, wenn der Benützer vergessen hat, das Gerät einzuschalten. Aufgrund dieses Uberlastungsschutzes für das Getriebe kann dasselbe relativ schwach dimensioniert werden, was im Hinblick auf einen kleinen Raum- und Kostenbedarf günstig ist.

Der Wandabschnitt der Vertiefung, mit dem sich der Stift verklemmt, kann einen im wesentlichen zur Schwenkachse des Antriebshebels koaxialen kreisbogenförmigen Verlauf aufweisen, wobei die Klemmverbindung zwischen dem Stift und diesem Wandabschnitt kraftschlüssig durch die zwischen Stift und Wandabschnitt auftretende Reibungskraft erfolgt. Das Lösen der Klemmverbindung kann in diesem Fall einfach durch Antreiben des Antriebshebels über das Getriebe vom Motor her erfolgen, wobei aber dann zumindest die Reibungskraft zwischen dem Stift und dem Wandabschnitt zu überwinden ist. In der Praxis kann zusätzlich zu dieser Reibungskraft noch eine durch auf die Kassette von Hand aus ausgeübten Druck verursachte Kraftkomponente hinzukommen, so dass dann zum Lösen der Klemmverbindung ein relativ grosser Kraftaufwand erforderlich ist, was wiederum eine relativ grosse Belastung des Motors und des Getriebes zur Folge hat. Als vorteilhaft hat sich daher erwiesen, wenn eine zumindest beim Koppeln einer Kassette mit dem Träger beim händischen Einschieben derselben bis in ihre Einschublage auf den Träger im wesentlichen entgegen der Einschubrichtung einwirkende Federeinrichtung vorgesehen ist, die nach dem Loslassen einer zuvor händisch bis in ihre Einschublage eingeschobenen, mit dem Träger gekoppelten Kassette zum Lösen der Klemmverbindung zwischen dem Stift und dem Wandabschnitt der Vertiefung den Träger entgegen der Einschubrichtung zurückverstellt, wobei der Stift von dem Wandabschnitt der Vertiefung abhebt. Auf diese Weise ist erreicht, dass das Lösen der Klemmverbindung nach dem Loslassen einer zuvor händisch bis in ihre Einschublage eingeschobenen Kassette selbsttätig und ohne Belastung für das Getriebe und den Motor mit der Kraft der Federeinrichtung erfolgt. Das Zurückverstellen des Trägers entgegen der Einschubrichtung nach dem Loslassen einer Kassette ist dabei dadurch begrenzt, dass der Stift gegen die der Längswand mit der Vertiefung gegenüberliegende Längswand des Langloches stösst, mit der der Stift beim motorischen Antreiben des Antriebshebels zum Verstellen des Trägers von seiner Ausgangslage in seine Betriebslage zusammenwirkt. Ferner ist erreicht, dass die Klemmverbindung zwischen dem Stift und dem Wandabschnitt der Vertiefung formschlüssig und daher besonders sicher erfolgen kann, weil der Formschluss nach dem Loslassen einer zuvor händisch bis in ihre Einschublage eingeschobene Kassette durch das Zurückverstellen des Trägers sicher wieder gelöst wird Zusätz lich ist hierbei vorteilhafterweise erreicht, dass der Vorgang des händischen Einschiebens einer Kassette und der Vorgang eines nach dem Lösen der Klemmverbindung erfolgenden motorischen Einziehens einer Kassette durch den Vorgang des Loslassens der Kassette deutlich voneinander getrennt sind, so dass dem Benützer die Kassette nach dem händischen Einschieben derselben nicht übergangslos aus der Hand gezogen wird, was von dem Benützer meist als überraschend und daher als störend empfunden wird.

Die Federeinrichtung kann durch das über den Antriebshebel und die Stift-Langloch-Verbindung mit dem Träger in Antriebsverbindung stehende Getriebe gebildet sein, wobei die Eigenfederung von mindestens einem Getriebeteil, der vor der Bildung der Klemmverbindung beim Koppeln einer Kassette mit dem Träger von diesem über die Stift-Langloch-Verbindung und den Antriebshebel gespannt wird, zur Erzielung der zumindest beim Koppeln einer Kassette mit dem Träger notwendigen Federwirkung ausgenützt wird, wobei aber nur relativ schwache und stark toleranzabhängige Federwirkungen erzielbar sind. Auch kann die Federeinrichtung durch eine einerseits am verstellbaren Träger und andererseits an einem an der Kassettenaufnahme feststehenden Teil angreifende Feder gebildet sein, die aber dann nicht nur beim Koppeln einer Kassette, sondern dauernd entgegen der Einschubrichtung auf den Träger einwirkt, so dass deren Federkraft beim motorischen Einziehen einer Kassette zusätzlich vom Motor überwunden werden muss. Als vorteilhaft hat sich daher erwiesen, wenn die Stift-Langloch-Verbindung zwischen dem Antriebshebel und einem am Träger im wesentlichen in der Einschubrichtung verstellbar gehaltenen Zwischenteil vorgesehen ist, an dem als Federeinrichtung eine zwischen ihm und dem Träger wirksame Feder angreift, die den Zwischenteil in der Einschubrichtung belastet und bei in seiner Ausgangslage befindlichem Träger an einen ersten am Träger vorgesehenen Begrenzungsanschlag angelegt hält, wobei beim Koppeln einer Kassette mit dem Träger beim händischen Einschieben derselben bis in ihre Einschublage der erste Begrenzungsanschlag entgegen der Kraft der Feder von dem über die Klemmverbindung festgehaltenen Zwischenteil abgehoben wird und sich ein zweiter am Träger vorgesehener Begrenzungsanschlag an dem Zwischenteil abstützt und nach dem Loslassen der bis in ihre Einschublage eingeschobenen Kassette die Feder den ersten Begrenzungsanschlag wieder am Zwischenteil zum Anliegen bringt. Auf diese Weise ist ereicht, dass nach dem Loslassen einer Kassette der mit ihr gekoppelte Träger durch die Kraft der zuvor beim Koppeln der Kassette mit dem Träger zwischen dem Träger und dem über die Klemmverbindung blockierten Zwischenteil zusätzlich gespannten Feder entgegen der Einschubrichtung zurückverstellt wird, wobei der Träger aufgrund des dynamischen Bewegungsablaufes über den wieder am Zwischenteil zur Anlage gebrachten ersten Begrenzungsanschlag den Zwischenteil entgegen der Einschubrichtung mitnimmt, wobei der Stift vom Wandabschnitt der Vertiefung abhebt und erforderlichenfalls aus der Vertiefung austritt, wodurch die Klemmverbindung aufgehoben wird. Da die Feder, die das Lösen der Klemmverbindung bewirkt, zwischen dem Träger und dem vom Träger gehaltenen Zwischenteil wirksam ist, bildet die Feder vorteilhafterweise beim motorischen Einziehen der Kassette keine zusätzliche Belastung für das Getriebe und den Motor.

Bei einem Gerät, bei dem das Lösen der Klemmverbindung nach dem Loslassen einer bis in ihre Einschublage eingeschobenen Kassette durch das Zurückverstellen des Trägers mit der Kraft einer Federeinrichtung erfolgt und bei dem an der Kassettenaufnahme eine von einer in dieselbe eingeschobenen Kassette auslösbare Schalteinrichtung zur Abgabe eines Schaltsignales bei bis in ihre Einschublage eingeschobener Kassette vorgesehen ist, an die eine Steuerschaltung zum Einschalten des Motors angeschlossen ist, kann zum Einschalten des Motors zum motorischen Einziehen einer Kassette das Schaltsignal über eine Verzögerungsschaltung an die Steuerschaltung weitergeleitet werden, wobei die Verzögerungsdauer der Verzögerungsschaltung zumindest so gross gewählt wird, dass im normalen Betriebsfall innerhalb dieser Verzögerungsdauer die Klemmverbindung gelöst wird. Wenn aber der Benützer eines solchen Gerätes im Zuge einer Fehlbedienung die bis in ihre Einschublage eingeschobene Kassette zu spät oder überhaupt nicht loslässt, dann wird nach Ablauf der Verzögerungsdauer die Steuerschaltung den Motor trotz nichtgelöster Klemmverbindung einschalten, wobei es dann zu einer Uberlastung und Beschädigung des Motors und des Getriebes kommen kann. Es hat sich daher in diesem Zusammenhang als vorteilhaft erwiesen, wenn nach dem Loslassen der bis in ihre Einschaltlage eingeschobenen Kassette und dem mit der Kraft der Federeinrichtung erfolgenden Zurückverstellen des Trägers die Schalteinrichtung die Abgabe des Schaltsignales beendet und die an die Schalteinrichtung angeschlossene Steuerschaltung das Ende des Schaltsignales detektiert und danach den Motor einschaltet. Auf diese Weise ist erreicht, dass das Einschalten des Motors und das dadurch bewirkte motorische Einziehen einer Kassette sicher erst nach dem Loslassen der zuvor händisch bis in ihre Einschublage eingeschobenen Kassette und dem Aufheben der Klemmverbindung erfolgt, so dass eine Uberlastung und Beschädigung des Motors und des Getriebes ausgeschlossen ist.

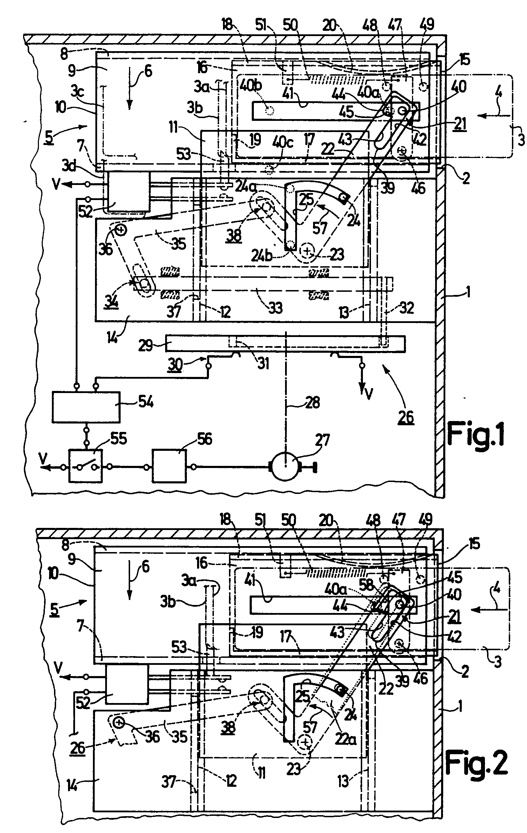

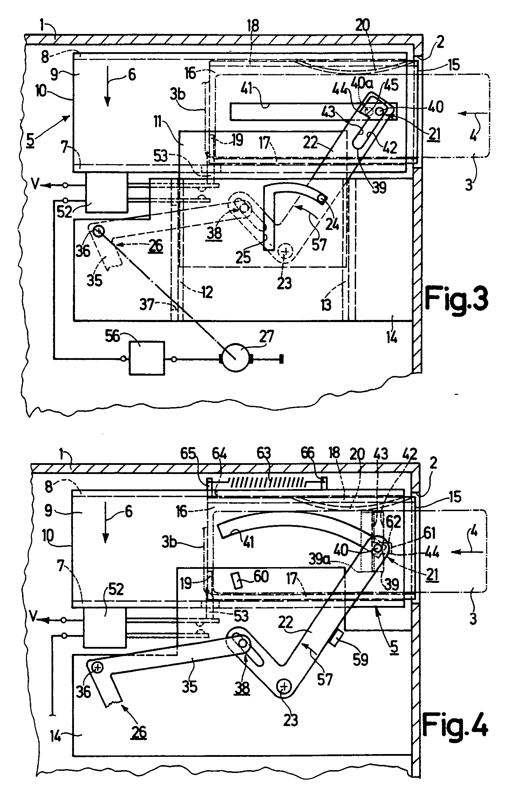

Die Erfindung wird im folgenden anhand von vier in den Zeichnungen dargestellten Ausführungsbeispielen, auf die sie jedoch nicht beschränkt sein soll, näher beschrieben. Die Fig. 1 zeigt schematisch in Seitenansicht die erfindungswesentlichen Teile eines Gerätes, bei dem jede Stift-Langloch-Verbindung zwischen zwei Antriebshebeln und zwei Trägern für eine Kassette ein im Antriebshebel vorgesehenes Langloch und einen mit dem Träger verbundenen Stift aufweist und bei dem die zwischen einem Stift und einem Wandabschnitt einer Vertiefung in einer Längswand eines Langloches gebildete Klemmverbindung in formschlüssiger Weise erfolgt, wobei beim Koppeln einer Kassette mit den beiden Trägern jeder der beiden Stifte unmittelbar mit dem Wandabschnitt zur Bildung der Klemmverbindung in Wirkverbindung tritt. Die Fig. 2 zeigt analog wie Fig. 1 ein gegenüber dem Gerät gemäss Fig. 1 abgewandeltes Gerät, bei dem die zwischen einem Stift und einem Wandabschnitt der Ventiefung gebildete Klemmverbindung ebenfalls in formschlüssiger Weise erfolgt, wobei aber beim Koppeln einer Kassette mit de beiden Trägern jeder der beiden Stifte zuerst gegen einen anderen Wandabschnitt der Vertiefungen stösst und über diesen den betreffenden Antriebshebel mitnimmt, wobei dann der Wandabschnitt zur Bildung der Klemmverbindung mit dem Stift in Wirkverbindung tritt. Die Fig. 3 zeigt analog wie die Fig. 1 und 2 ein weiteres gegenüber den Geräten gemäss den Fig. 1 und 2 abgewandeltes Gerät, bei dem die zwischen einem Stift und einem Wandabschnitt der Vertiefung gebildete Klemmverbindung in kraftschlüssiger Weise erfolgt. Die Fig. 4 zeigt analog wie die Fig. 1 bis 3 ein Gerät, bei dem jede Stift-Langloch-Verbindung zwischen zwei Antriebshebeln und zwei Trägern für eine Kassette ein im Träger vorgesehenes Langloch und einen mit dem Antriebshebel verbundenen Stift aufweist und bei dem die zwischen einem Stift und einem Wandabschnitt einer Vertiefung in einer Längswand eines Langloches gebildeten Klemmverbindung in formschlüssiger Weise erfolgt.

Das in Fig. 1 dargestellte Aufzeichnungs- und/oder Wiedergabegerät weist ein Gerätegehäuse 1 auf, das an seiner Frontseite mit einer Offnung 2 versehen ist, durch die eine in Fig. 1 nur schematisch mit strichpunktierten Linien angedeutete Kassette 3, in der beispielsweise ein bandförmiger Aufzeichnungsträger, wie ein Magnetband, untergebracht ist, in einer mit dem Pfeil angegebenen Einschubrichtung in das Gerät von Hand aus einführbar ist. Selbstverständlich kann in einer solchen Kassette 3 auch ein scheibenförmiger Aufzeichnungsträger, wie eine Magnetplatte untergebracht sein.

Zur Aufnahme einer Kassette 3 weist das Gerät eine Kassettenaufnahme 5 auf, die von einer in Fig. 1 dargestellten Ladeposition, in der eine Kassette 3 in der Einschubrichtung 4 in dieselbe einschiebbar ist, in einer senkrecht zu den Hauptflächen einer eingeschobenen Kassette verlaufenden, mit einem Pfeil 6 angegebenen Richtung in eine nicht dargestellte Arbeitsposition absenkbar und in entgegengesetzter Richtung wieder anhebbar ist. An der Arbeitsposition der Kassettenaufnahme 5 wirken mit einer in derselben befindlichen Kassette geräteseitige Antriebseinrichtungen zum Antreiben des Aufzeichnungsträgers und geräteseitige Abtasteinrichtungen zum Abtasten des Aufzeichnungsträgers zum Aufzeichnen und/oder Wiedergeben von Informationssignalen zusammen. Die Kassettenaufnahme 5 weist einen im wesentlichen aus einer Bodenwand 7, einer Deckenwand 8 und zwei Seitenwänden 9, von denen in Fig. 1 aufgrund der Seitenansicht nur eine sichtbar ist, bestehenden schachtförmigen Behälter 10 auf, mit dessen Seitenwänden 9 je eine Führungsplatte 11 verbunden ist. Jede Führungsplatte 11 ist zwischen zwei Führungen 12 und 13 in Richtung des Pfeiles 6 verstellbar geführt. Die Führungen 12 und 13 sind je an einer mit dem Gerätegehäuse 1 fest verbundenen Chassisplatte 14 angebracht und ragen in den zwischen den beiden Chassisplatten 14 befindlichen Raum, so dass die Kassettenaufnahme 5 auf diese Weise zwischen den beiden Chassisplatten 14 zwischen ihrer Ladeposition und ihrer Arbeitsposition verstellbar gehalten ist.

Zum Halten einer Kassette 3 in der Kassettenaufnahme 5 weist diese zwei Träger 15 auf, von denen in Fig. 1 nur einer sichtbar ist. Die beiden Träger 15 sind im wesentlichen als im Querschnitt U-förmige Bügel ausgebildet, die innerhalb des Behälters 10 auf nicht näher dargestellte Weise in der Einschubrichtung 4 verschiebbar geführt sind und die mit ihren Stegwänden 16 mit Abstand neben den Seitenwänden 9 des Behälters 10 liegen und mit ihren Bodenwänden 17 an der Bodenwand 7 des Behälters 10 und mit ihren Deckenwänden 18 an der Deckenwand 8 des Behälters 10 gleitend anliegen, wobei die Boden- und Deckenwände 17 und 18 der beiden Bügel 15 aufeinander zu ausgerichtet sind. Die beiden Bügel 15 sind in der Einschubrichtung 4 von einer in Fig. 1 dargestellten Ausgangslage in eine nicht dargestellte Betriebslage verstellbar. Im wesentlichen in der Ausgangslage der beiden Bügel 15 ist eine Kassette 3 beim händischen Einschieben derselben mit den beiden Bügeln koppelbar. Das händische Einschieben ist dabei maximal bis in eine sogenannte Einschublage der Kassette möglich, die durch einen von der Bodenwand 17 in Richtung zur Deckenwand 18 abstehenden lappenförmigen Kopplungsanschlag 19 an jedem Bügel 15 festgelegt ist, was nachfolgend noch detailliert beschrieben ist. Auf eine mit den beiden Bügeln 15 gekoppelte Kassette 3 wirken zwei Blattfedern 20 ein, von denen je eine in der Deckenwand 18 eines Bügels 15 befestigt ist und die eine mit den Bügeln gekoppelte Kassette gegen die Bodenwände 17 der Bügel drücken. Durch Verstellen der beiden Bügel 15 in der Einschubrichtung 4 in ihre Betriebslage, was nachfolgend noch beschrieben ist, wird eine mit den beiden Bügeln gekoppelte, bis zu den Kopplungsanschlägen 19 händisch eingeschobene Kassette 3 zur Gänze in den Behälter 10 der Kassettenaufnahme 5 hineinbefördert.

Zur Verstellung der beiden Bügel 15 und der mit ihnen gekoppelten Kassette 3 steht jeder der beiden Bügel über eine Stift-Langloch-Verbindung 21 mit einem verschwenkbaren Antriebshebel 22 in Antriebsverbindung, von denen in Fig. 1 nur einer sichtbar ist. Die beiden Antriebshebel 22 sind je zwischen einer Chassisplatte 14 und einer Führungsplatte 11 angeordnet und über je ein Schwenklager 23 an den Führungsplatten 11 der Kassettenaufnahme 5 schwenkbar gelagert. Die Antriebshebel 22 tragen je einen Führungsstift 24, der durch je einen in den Chasisplatten 14 vorgesehenen Führungsschlitz 25 hindurchragt. Die Führungsschlitze 25 weisen einen kreisbogenförmigen, zur Achse der Schwenklager 23 der Antriebshebel 22 koaxial verlaufenden Abschnitt und einen parallel zur Verstellrichtung 6 der Kassettenaufnahme 5 verlaufenden Abschnitt auf. Dadurch, dass sich die Führungsstifte 24 an das abgeschlossene Ende der kreisbogenförmigen Abschnitte der Führungsschlitze 25 anlegen, ist über die Antriebshebel 22 und die Stift-Langloch-Verbindungen 21 die Ausgangslage der Bügel 15 festgelegt.

Die beiden Antriebshebel 22 sind über ein Getriebe 26 von einem Motor 27 her antreibbar. Das Getriebe 26 weist eine vom Motor antreibbare, schematisch dargestellte Antriebsverbindung 28 zum Antreiben einer Kulissenscheibe 29 auf. Die Antriebsverbindung 28 kann entsprechend den Erfordernissen hinsichtlich Kraftübersetzung, Geschwindigkeitsübersetzung oder dergleichen durch ein Zahnradgetriebe, ein Schneckengetriebe oder auch durch die Motorwelle selbst gebildet sein. Mit der Kulissenscheibe 29 wirkt eine schematisch dargestellte Schleifringanordnung 30 zusammen, die in bekannter Weise zur Detektion der Winkelposition der Kulissenscheibe 29 dient, um diese in vorgegebene Winkelpositionen anhalten zu können. Die Kulissenscheibe 29 weist an einer Seitenfläche eine durch eine in sich geschlossene Nut 31 gebildete Kulisse auf, in die als Kulissenfolger ein Stift 32 ragt, der von einem Ende eines Verstellschiebers 33 absteht. Der Verstellschieber 33 steht an seinem anderen Ende über eine Stift-Schlitz-Verbindung 34 mit einem Winkelhebel 35 in Antriebsverbindung. Der Winkelhebel 35 ist auf einer in den beiden Chassisplatten 14 verdrehbar gelagerten Welle 36 verdrehfest befestigt, auf der auch noch ein zweiter jedoch mit dem Verstellschieber 33 nicht in Antriebsverbindung stehender, praktisch gleich ausgebildeter Winkelhebel verdrehfest befestigt ist. Die beiden Winkelhebel 35 sind auf diese Weise über die Welle 36 zur Erzielung einer synchronen Schwenkbewegung derselben miteinander verbunden. Die beiden Winkelhebel 35 tragen am Ende ihrer längeren, Arme, die durch Durchbrüche 37 in den Führungen 12 hindurchgeführt sind, je einen Stift einer weiteren Stift-Schlitz-Verbindung 38, über die die Winkelhebel 35 mit den Antriebshebeln 22 in Antriebsverbindung stehen. Das Getriebe 26 zum Antreiben der beiden Antriebshebel 22 besteht somit aus der Antriebsverbindung 28, der Kulissenscheibe 29, dem Verstellschieber 33 und den beiden auf der Welle 36 drehfest angebrachten Winkelhebeln 35, von denen in Fig. 1 nur einer sichtbar ist.

Die Stift-Langloch-Verbindungen 21 weisen in vorliegendem Fall je ein in den Antriebshebeln 22 vorgesehenes Langloch 39 und je einen mit den Bügeln 15 verbundenen Stift 40 auf. Die beiden Stifte 40 sind durch Durchbrüche 41 in den Seitenwänden 9 des Behälters 10 hindurchgeführt, um mit den Langlöchern 39 zusammenwirken zu können. Bei in ihrer Ausgangslage befindlichen Bügeln 15 sind die Langlöcher 39 zur Einschubrichtung 4 schräg verlaufend angeordnet. Beim Antreiben der Antriebshebel 22 vom Motor 27 über das Getriebe 26 zum Verstellen der Bügel 15 von ihrer in Fig. 1 dargestellten Ausgangslage in ihre nicht dargestellte Betriebslage wirken die in Einschubrichtung 4 hinteren Längswände 42 der Langlöcher 39 der Stift-Langloch-Verbindungen 21 mit den Stiften 40 derselben zusammen. Die Langlöcher 39 weisen nunmehr in den in der Einschubrichtung 4 vorderen Längswänden 43, die den beim motorischen Antreiben der Antriebshebel 22 zum Verstellen der Bügel 15 von ihrer Ausgangslage in ihre Betriebslage mit den Stiften 40 zusammenwirkenden Längswänden 42 gegenüberliegen, je eine im wesentlichen in der Einschubrichtung 4 verlaufende Vertiefung 44 auf. Wie aus Fig. 1 ersichtlich, liegen bei in ihrer Ausgangslage befindlichen Bügeln 15 die Vertiefungen 44 und die Stifte 40 in der Einschubrichtung 4 einander gegenüber. Die Vertiefungen 44 weisen je einen ebenen Wandabschnitt 45 auf, der bei in ihrer Ausgangslage befindlichen Bügeln 15, wie Fig. 1 zeigt, mit der Einschubrichtung einen Winkel von etwa 15° einschliesst und dem betreffenden Stift 40 in der Einschubrichtung unmittelbar gegenüberliegt. Beim Koppeln einer Kassette 3 mit den Bügeln 15 beim händischen Einschieben derselben bis in ihre Einschublage treten die mit den Bügeln verbundenen Stifte 40 in die Vertiefungen 44 ein und verklemmen sich zur Bildung einer formschlüssigen Klemmverbindung unmittelbar mit den Wandabschnitten 45 derselben zur Blockierung einer Schwenkbewegung der Antriebshebel 22, wie dies nachfolgend noch beschrieben wird.

Jede Stift-Langloch-Verbindung 21 ist zwischen einem Antriebshebel 22 und einem an dem mit diesem Antriebshebel in Antriebsverbindung stehenden Bügel 15 im wesentlichen in der Einschubrichtung 4 um eine Schwenkachse 46 verschwenkbar gehaltenen Zwischenhebel 47 vorgesehen, der zwischen der Stegwand 16 des Bügels und einer Seitenwand 9 des Behälters 10 angeordnet ist. Der Schwenkbereich jedes Zwischenhebels 47 ist durch einen in Einschubrichtung 4 vor dem Zwischenhebel 47 liegenden, von der Stegwand 16 des Bügels 15 abstehenden ersten Begrenzungsanschlag 48 und einen in Einschubrichtung 4 hinter dem Zwischenhebel 47 liegenden, von der Stegwand 16 des Bügels 15 abstehenden zweiten Begrenzungsanschlag 49 begrenzt. An jedem Zwischenhebel 47 greift eine Zugfeder 50 mit ihrem einen Ende an, deren anderes Ende an einem von der Deckenwand 18 jedes Bügels 15 abstehenden Lappen 51 angreift. Die Zugfedern 50 wirken beim Koppeln einer Kassette mit den Bügeln beim händischen Einschieben derselben bis in ihre Einschublage gegen Ende des Kopplungsvorganges auf die Bügel 15 entgegen der Einschubrichtung 4 ein. Die Zugfedern 50 verstellen die Bügel 15 nach dem Loslassen einer zuvor händisch bis in ihre Einschublage eingeschobenen, mit den Bügeln gekoppelten Kassette 3 zum Lösen der Klemmverbindungen zwischen den Stiften 40 und den Wandabschnitten 45 der Vertiefungen 44 entgegen der Einschubrichtung 4 zurück, wobei die Stifte 40 von den Wandabschnitten 45 der Vertiefungen 44 abheben und aus den Vertiefungen 44 wieder heraustreten. Die Zugfedern 50 belasten die Zwischenhebel 47 in der Einschubrichtung 4 und bei in ihrer Ausgangslage befindlichen Bügeln 15 halten sie die Zwischenhebel 47 an den ersten Begrenzungsanschlägen 48 angelegt. Beim Koppeln einer Kassette 3 mit den Bügeln beim händischen Einschieben derselben bis in ihre Einschublage werden gegen Ende des Kopplungsvorganges die ersten Begrenzungsanschläge 48 entgegen der Kraft der Zugfedern 50 von den über die zwischen den Stiften 40 und den Wandabschnitten 45 der Vertiefungen 44 gebildeten Klemmverbindungen festgehaltenen Zwischenhebeln 47 abgehoben, wobei die Zugfedern 50 weiter gespannt werden, und stützen sich die zweiten Begrenzungsanschläge 49 zur Begrenzung der Verstellbewegung der Bügel 15 in der Einschubrichtung 4 an den Zwischenhebeln 47 ab. Nach dem Loslassen einer bis in ihre Einschublage angeschobenen Kassette 3 bringen die Zugfedern 50 die ersten Begrenzungsanschläge 48 wieder an den Zwischenhebeln 47 zum Anliegen, wobei die Bügel 15 von den zuvor weiter gespannten Zugfedern 50 entgegen der Einschubrichtung 4 zurückverstellt werden, wie dies nachfolgend noch beschrieben wird. Anstelle der Zwischenhebel 47 könnten auch genau in der Einschubrichtung an den Bügeln 15 verschiebbar geführte, zwischen zwei Begrenzungsanschlägen verstellbare Zwischenschieber vorgesehen sein.

An der Bodenwand 7 des Behälters 10 der Kassettenaufnahme 5 ist eine von einer in die Kassettenaufnahme eingeschobenen Kassette 3 auslösbare Schalteinrichtung 52 vorgesehen, die in vorliegendem Falle als an eine Versorgungsspannung V angeschlossener Mikroschalter ausgebildet ist. Selbstverständlich kann die Schalteinrichtung auch mit Hilfe einer fotoelektrischen Lichtschranke aufgebaut sein. Der Mikroschalter 52 weist einen durch die Bodenwand 7 des Behälters 10 hindurchgeführten, in die Bewegungsbahn einer Kassette ragenden Fühler 53 auf, über den der Mikroschalter zur Abgabe eines Schaltsignales durch Weiterleiten der Versorgungsspannung V schliessbar ist. Der Fühler 53 ist hierbei so angeordnet, dass die Abgabe des Schaltsignals erst bei vollständig bis in ihre Einschublage eingeschobener Kassette erfolgt. An den Mikroschalter 52 ist eine Steuerschaltung 54 zum Einschalten des Motors 27 angeschlossen, mit der auch die ebenfalls an die Versorgungsspannung V angeschlossene Schleifringanordnung 30 verbunden ist. Von der Steuerschaltung 54 ist ein an dieselbe angeschlossener elektronischer Schalter 55 steuerbar, der in seinem leitenden Zustand die Versorgungsspannung V an eine Verstärkerschaltung 56 zum Speisen des Motors 27 anschaltet, so dass dann der Motor 27 eingeschaltet ist.

Nach dem Loslassen einer bis in ihre Einschublage eingeschobene Kassette 3 und dem mit der Kraft der Zugfedern 50 erfolgenden Zurückverstellen der Bügel 15, wobei die Klemmverbindungen zwischen den Stiften 40 und den Wandabschnitten 45 der Vertiefungen 44 gelöst werden, beendet der Mikroschalter 52 die Abgabe des Schaltsignales, weil die Kassette den Fühler 53 des Mikroschalters 52 wieder freigibt. Die an den Mikroschalter 52 angeschlossene Steuerschaltung 54 ist nun so ausgebildet, dass sie das Ende des Schaltsignales detektiert und danach den Motor 27 einschaltet. Als besonders einfach und vorteilhaft hat sich hierbei erwiesen, wenn die Steuerschaltung 54 mit Hilfe eines Mikroprozessors realisiert wird, dem das Schaltsignal an einem seiner Signaleingänge zugeführt wird und der im Zuge seines programmablaufs diesen Signaleingang, solange sich die Kassettenaufnahme in ihrer Ladeposition befindet, in bekannter Weise zyklisch aufeinanderfolgend dahingehend überwacht, zu welchem Zeitpunkt das an ihn angelegte Schaltsignal nicht mehr vorhanden ist. Sobald der Mikroprozessor das Ende des Schaltsignales feststellt, gibt er an einem seiner Signalausgänge ein Steuersignal zum Schliessen des elektronischen Schalters 55 ab, wodurch der Motor 27 eingeschaltet wird.

Im folgenden wird die Funktionsweise des vorstehend beschriebenen Gerätes beim händischen Einschieben einer Kassette und beim nachfolgenden motorischen Einziehen derselben beschrieben. Wenn bei in ihrer Ladeposition befindlicher Kassettenaufnahme 5 und bei in ihren Ausgangslagen befindlichen Bügeln 15, wie dies in Fig. 1 dargestellt ist, eine Kassette 3 in der Einschubrichtung 4 durch die Offnung 2 im Gerätegehäuse 1 hindurch in das Gerät eingeschoben wird, um die Kassette mit den Bügeln 15 zu koppeln, dann kommt die Kassette zwischen den beiden Bügeln zu liegen, wobei sie von den Stegwänden 16 der Bügel 15 seitlich geführt wird. Beim weiteren Einschieben stösst die Kassette mit ihrer quer zur Einschubrichtung verlaufenden vorderen Oberkante gegen die beiden Blattfedern 20 an den Deckenwänden 18 der Bügel 15, wodurch die Bügel 15 in der Einschubrichtung 4 mitgenommen und etwas aus ihrer Ausgangslage verstellt werden. Hierbei treten die Stifte 40 der Stift-Langloch-Verbindungen in die Vertiefungen 44 der Langlöcher 39 ein und stossen unmittelbar gegen die Wandabschnitte 45 derselben, wobei sie sich an diesen abstützen. Diese Lage der Stifte 40 ist in Fig. 1 mit punktierten Linien dargestellt und mit dem Bezugszeichen 40a bezeichnet; die hierzu entsprechende Lage der die Stifte tragenden Zwischenhebel und der Bügel ist der Ubersichtlichkeit halber nicht dargestellt. Von den an den Wandabschnitten 45 abgestützten Stiften 40 werden beim händischen Einschieben der Kassette auf die Antriebshebel 22 Kräfte ausgeübt, die danach trachten, die Antriebshebel in Richtung des Pfeiles 57 zu verschwenken. Um eine solche Schwenkbewegung ausführen zu können, müssen die Wandabschnitte 45 eine zumindest teilweise die Einschubrichtung querende, entgegen der Richtung des Pfeiles 6 verlaufende Verstellbewegung ausführen können, was aber durch die sich an den Wandabschnitten 45 abstützenden Stifte 40 auf formschlüssige Weise verhindert ist, weil diese nur in der Einschubrichtung 4 und nicht quer zu derselben verstellbar sind. Auf diese Weise sind zwischen den Stiften 40 und den Wandabschnitten 45 der Vertiefungen 44 formschlüssige und daher sicher wirksame Klemmverbindungen gebildet und dadurch die Antriebshebel 22 auf einfache Weise sicher gegen eine Schwenkbewegung derselben beim händischen Einschieben einer Kassette zum Koppeln derselben mit den Bügeln blockiert.

Beim weiteren Einschieben einer Kassette zum Koppeln derselben mit den Bügeln 15 bleiben die Bügel in der etwas von ihrer Ausgangslage abweichenden, durch die an den Wandabschnitten 45 verklemmten Stifte 40 festgelegten Lage, die der mit dem Bezugszeichen 40a bezeichneten Lage der Stifte 40 entspricht. Im Verlauf dieses weiteren Einschiebens, bei dem die Kassette unter den beiden auf sie einwirkenden Blattfedern 20 durchgeschoben wird, stösst die Kassette mit ihrer in Einschubrichtung vorne liegenden schmalen Seitenfläche gegen die Kopplungsanschläge 19 an den Bügeln 15, wobei dann die Kassette die in Fig. 1 mit dem Bezugszeichen 3a bezeichnete Position einnimmt. Bis zu diesem Zeitpunkt des Einschiebevorganges liegen die Zwischenhebel 47 mit der Kraft der Zugfedern 50 an den ersten Begrenzungsanschlägen 48 an. Beim noch weiteren Einschieben der Kassette nimmt diese über die Kopplungsanschläge 19 die beiden Bügel 15 in der Einschubrichtung mit, wobei die ersten Begrenzungsanschläge 48 entgegen der Kraft der Zugfedern 50 beim weiteren Spannen derselben von den über die zwischen den Stiften 40 und den Wandabschnitten 45 gebildeten Klemmverbindungen festgehaltenen Zwischenhebeln 47 abgehoben sind und sich die zweiten Begrenzungsanschläge 49 an den Zwischenhebeln 47 zur Begrenzung des Einschubweges der Kassette abstützen, wobei dann die an den Kopplungsanschlägen 19 anliegende Kassette die in Fig. 1 mit dem Bezugszeichen 3b bezeichnete Position einnimmt, welche die Einschublage der Kassette darstellt, in die eine Kassette beim händischen Einschieben maximal einschiebbar ist. Bei der Verstellung der Kassette aus ihrer mit dem Bezugszeichen 3a bezeichneten Position in ihre mit dem Bezugszeichen 3b bezeichnete Einschublage tritt sie mit dem Fühler 53 des Mikroschalters 52 in Wirkverbindung, so dass der Mikroschalter geschlossen wird und an den Mikroprozessor 54 ein Schaltsignal abgibt, sofern der Benützer das Gerät ordnungsgemäss eingeschaltet hat, was durch Schliessen eines Netzschalters oder auch durch Anstecken eines Netzsteckers an eine Steckdose erfolgen kann.

Ein weiteres händisches Einschieben der Kassette über ihre Einschublage hinaus ist nun nicht mehr möglich, da sich die Kassette an den die Einschublage festlegenden Kopplungsanschlägen 19 der Bügel 15 abstützt und die Bügel 15 über die an den zweiten Begrenzungsanschlägen 49 abgestützten Zwischenhebel 47 von den an den Wandabschnitten 45 verklemmten Stiften 40 gegen eine weitere Verstellung in der Einschubrichtung blockiert sind. Wenn der Benützer des Gerätes nun durch weiteres Nachdrücken auf die Kassette 3 versucht, dieselbe weiter in die Kassettenaufnahme 5 hineinzuschieben, bzw. den Vorgang des motorischen Einziehens der Kassette auszulösen, dann wird die von Hand aus auf die Kassette ausgeübte Kraftwirkung über die Kopplungsanschläge 19, die Bügel 15, die an den zweiten Begrenzungsanschlägen 49 abgestützten Zwischenhebel 47, die Stifte 40 und die Wandabschnitte 45 der Vertiefungen 44 der Langlöcher 39 auf die gegen Verschwenken blockierten Antriebshebel 22 übertragen, wobei aber aufgrund der Blockierung der Antriebshebel 22 eine weitere Kraftübertragung auf das Getriebe verhindert ist, so dass das Getriebe einfach und sicher vor Uberlastung und Beschädigung geschützt ist und daher vorteilhafterweise relativ schwach und daher raum- und kostengünstig ausgebildet sein kann.

Wenn nun der Benützer des Gerätes die bis in ihre mit dem Bezugzeichen 3b bezeichnete Einschublage eingeschobene, mit den Bügeln 15 gekoppelte Kassette loslässt, dann ziehen die zuvor beim Einschieben der Kassette gegen Ende des Einschubvorganges weiter gespannten Zugfedern 50 die Bügel 15 entgegen der Einschubrichtung zurück. Bei diesem Zurückziehen der Bügel 15 kommen die ersten Begrenzungsanschläge 48 wieder an den Zwischenhebeln 47 zum Anliegen und werden aufgrund des dynamischen Bewegungsablaufes die Bügel samt den wieder an den ersten Begrenzungsanschlägen 48 anliegenden Zwischenhebeln 47 soweit entgegen der Einschubrichtung 4 verstellt, bis sich die Stifte 40 an den in Einschubrichtung hinteren Längswänden 42 der Langlöcher 39 anlegen, wobei dann die Stifte 40 von den Wandabschnitten 45 der Vertiefungen 44 abgehoben und aus den Vertiefungen wieder herausbewegt sind, so dass die beim händischen Einschieben gebildeten Klemmverbindungen zwischen den Stiften 40 und den Wandabschnitten 45 der Vertiefungen 44 wieder gelost sind. Da die Zugfedern 50 zwischen den Bügeln 15 und dem nach dem Loslassen der Kassette und dem Zurückverstellen der Bügel wieder an den ersten Begrenzungsanschlägen 48 an den Bügeln anliegenden Zwischenhebeln 47 wirksam sind, stellen die Zugfedern beim nachfolgenden motorischen Einziehen einer Kassette in die Kassettenaufnahme vorteilhafterweise keine zusätzliche Belastung für den Antriebsmotor 27 dar. Nach dem Loslassen der zuvor bis in ihre Einschublage 3b eingeschobenen Kassette und dem mit der Kraft der Zugfedern 50 erfolgenden Zurückverschieben der Bügel 15 gibt die Kassette den Fühler 53 des Mikroschalters 52 wieder frei, wodurch der Mikroschalter geöffnet und das von ihm abgegebene Schaltsignal beendet wird. Der Mikroprozessor 54 detektiert das Ende des Schaltsignals und gibt danach das Steuersignal zum Schliessen des Schalters 55 ab, wodurch der Motor 27 eingeschaltet wird. Auf diese Weise ist sichergestellt, dass das Einschalten des Motors 27 mit Sicherheit nach dem Loslassen einer Kassette und dem dadurch ermöglichten sicheren Lösen der Klemverbindungen zwischen den Stiften 40 und den Wandabschnitten 45 erfolgt.

Der Motor 27 treibt nun über die Antriebsverbindung 28 die Kulissenscheibe 29 an, wodurch über die Nut 31 und den Stift 32 der Verstellschieber 33 in der Einschubrichtung 4 verschoben wird. Dabei wird über die Stift-Schlitz-Verbindung 34 der eine der beiden Winkelhebel 35 und über die Welle 36 auch der andere der beiden Winkelhebel 35 im Uhrzeigersinn verschwenkt, was ein entsprechendes Verstellen der Antriebshebel 22 zur Folge hat. Bei diesem Verstellen der Antriebshebel 22 gleiten die Führungsstifte 24 zuerst in den kreisbogenförmigen Abschnitten der Führungsschlitze 25, wobei die Antriebshebel 22 entgegen dem Uhrzeigersinn in Richtung des Pfeiles 57 verschwenkt werden. Dabei werden über die in Einschubrichtung hinteren Längswände 42 der Langlöcher 39, die Stifte 40 und die an den ersten Begrenzungsanschlägen 48 angestützten Zwischenhebel 47 die Bügel 15 und die mit ihnen gekoppelte Kassette 3 in der Einschubrichtung 4 soweit verschoben, bis die Bügel 15 ihre Betriebslage einnehmen, in der die Kassette ihre in Fig. 1 mit dem Bezugzeichen 3c bezeichnete Position einnimmt, wobei die Stifte 40 die in Fig. 1 mit punktierten Linien angedeutete, mit dem Bezugzeichen 40b, bezeichnete Lage und die Führungsstifte 24 die in Fig. 1, mit punktierten Linien angedeutete, mit dem Bezugzeichen 24a bezeichnete Lage einnehmen.

Am Ende dieser Schwenkbewegung der Antriebshebel 22 stossen die Führungsstifte 24 gegen die in Einschubrichtung 4 vorne liegenden Begrenzungswände der in Richtung des Pfeiles 6 verlaufenden Abschnitte der Führungsschlitze 25, so dass ein weiteres Verschwenken der Antriebshebel 22 in Richtung des Pfeiles 57 blockiert ist und die Bügel 15 über die verschwenkten Antriebshebel 22 in ihrer Betriebslage gehalten bleiben. Die weitere Schwenkbewegung der Winkelhebel 35 wird ab diesem Zeitpunkt über die Stift-Schlitz-Verbindungen 38 und die gegen Verschwenken in Richtung des Pfeiles 57 blockierten Antriebshebel 22 und deren Schwenklager 23 auf die Führungsplatten 11 der Kassettenaufnahme 5 übertragen, wodurch die Kassettenaufnahme 5 in Richtung des Pfeiles 6 in ihre Arbeitsposition abgesenkt wird, wobei die Bügel 15 von den Antriebshebeln 22 in ihrer Betriebslage gehalten werden. Die Arbeitsposition der Kassettenaufnahme 5 ist dann erreicht, wenn die Führungsstifte 24 gegen das abgeschlossene Ende der in Richtung des Pfeiles 6 verlaufenden Abschnitte der Führungsschlitze 25 stossen, wie dies in Fig. 1 mit punktierten Linien angedeutet ist, wobei die Lage der Führungsstifte 24 mit dem, Bezugzeichen 24b bezeichnet ist. Hierbei nehmen die Stifte 40 die in Fig. 1 mit dem Bezugzeichen 40c bezeichnete, punktiert dargestellte Lage und die Kassette 3 die in Fig. 1 mit dem Bezugzeichen 3d bezeichnete Lage ein. Zur Verstellung der Kassettenaufnahme in ihre Arbeitsposition muss die Kulissenscheibe 29 im wesentlichen um eine halbe Umdrehung aus der in Fig. 1 dargestellten Ausgangslage gedreht werden. Nach dem Verdrehen um eine halbe Umdrehung gibt die Kulissenscheibe 29 über die mit ihr zusammenwirkende Schleifringanordnung 30 an den Mikroprozessor 54 ein Positionssignal ab, dessen Auftreten der Mikroprozessor im Zuge seines Programmablaufes detektiert, wonach der Mikroprozessor das Steuersignal zum Schliessen des Schalters 55 wieder beendet, so dass der Motor 27 abgeschaltet wird. Damit ist der Vorgang des motorischen Einziehens der Kassette in die Kassettenaufnahme und des Uberführens derselben in ihre Arbeitslage abgeschlossen.

Um die Kassettenaufnahme 5 samt einer darin enthaltenen Kassette 3 wieder aus ihrer Arbeitsposition zu bringen, ist der Mikroprozessor 54 von einer separaten, nicht dargestellten Taste her ansteuerbar, bei deren Betätigung der Mikroprozessor 54 den Motor 27 wieder für die Dauer einer halben Umdrehung der Kulissenscheibe 29 einschaltet, wobei vom Motor 27 über das Getriebe 26 die Antriebshebel 22 in sinngemäss umgekehrter Weise als vorstehend beschrieben verstellt werden, wobei zuerst die Kassettenaufnahme 5 angehoben und danach die Bügel 15 wieder in ihre in Fig. 1 dargestellte Ausgangslage zurückverstellt werden, wonach eine Kassette händisch aus der Kassettenaufnahme herausziehba und aus dem Gerät entnehmbar ist.

Bei dem in Fig. 2 dargestellten Gerät sind die Vertiefungen 44 der Langlöcher 39 der Stift-Langloch-Verbindungen 21 in Abwandlung gegenüber den Vertiefungen beim Gerät gemäss Fig. 1 so ausgebildet, dass beim händischen Einschieben einer Kassette 3 bis in ihre Einschublage 3b zum Koppeln derselben mit den beiden Bügeln 15 jeder der beiden Stifte 40 zuerst gegen einen in Einschubrichtung 4 vorne liegenden Wandabschnitt 58 der Vertiefungen 4 stösst. Dabei werden von den Stiften 40 über die Wandabschnitte 58 die Antriebshebel 22 mitgenommen und hierbei in Richtung des Pfeiles 57 verschwenkt. Diese Schwenkbewegung erfolgt solange, bis die mitverschwenkten Wandabschnitte 45 an die Stifte 40 anstossen und sich an diesen formschlüssig abstützen, wobei dann wieder zwischen den Stiften 40 und den Wandab-schnitten 45 formschlüssige lösbare Klemmver-bindungen zur sicheren Blockierung einer Schwenkbewegung der Antriebshebel 22 gebildet sind. Diese Situation ist in Fig. 2 mit punktierten Linien dargestellt, wobei die Lage der Stifte 40 mit den Bezugszeichen 40a und die Lage der Antriebshebel 22 mit dem Bezugszeichen 22a bezeichnet ist. Da beim vorliegenden Gerät die Stifte 40 beim Einschieben einer Kassette nicht unmittelbar gegen die Wandabschnitte 45 zur Bildung der Klemmverbindungen stossen, wie dies beim Gerät gemäss Fig. 1 der Fall ist, ist bei in ihrer Ausgangslage befindlichen Bügeln 15 die Relativlage der Wandabschnitte 45, an denen sich die Stifte 40 verklemmen, gegenüber den Stiften 40 vorteilhafterweise unkritischer. Der übrige Aufbau und die Funktionsweise des Gerätes gemäss Fig. 2 stimmt mit dem Gerät gemäss Fig. 1 überein, so dass auch bei diesem Gerät alle Vorteile wie beim Gerät gemäss Fig. 1 erhalten werden.

Bei dem Gerät gemäss Fig. 2, bei dem vor der Bildung der Klemmverbindungen zwischen den Stiften 40 und den Wandabschnitten 45 die Antriebshebel 22 über die Stifte 40 zuerst etwas verschwenkt werden, kann diese Schwenkbewegung dafür ausgenützt werden, um mindestens einen im Getriebe 26 enthaltenen Getriebeteil, beispielsweise den längeren Arm der Winkelhebel 35, elastisch zu spannen, wobei die durch die Eigenfederung des Getriebeteiles erreichte Federwirkung zum Zurückverstellen der Bügel 15 über die Antriebshebel 22 nach dem Loslassen der zuvor bis in ihre Einschublage 3b eingeschobenen Kassette ausgenützt wird. Hierdurch können die Zwischenhebel 47 und die Zugfedern 50 eingespart werden und die Stifte 40 einfach an den Stegwänden 16 der Bügel 15 angebracht werden.

Bei dem Gerät gemäss Fig. 3 sind die Stifte 40 der Stift-Langloch-Verbindungen 21 unmittelbar an den Stegwänden der Bügel 15 angebracht und weisen die Wandabschnitte 45 der Vertiefungen 44 der Langlöcher 39, an denen sich die Stifte 40 verklemmen, einen zu den Achsen der Schwenklager 23 der Antriebshebel 22 koaxialen kreisbogenförmigen Verlauf auf und liegen diese Wandabschnitte 45 bei in ihrer Ausgangslage befindlichen Bügeln 15 unmittelbar im Verstellweg der beim Einschieben einer Kassette von den Bügeln mitverstellten Stifte 40. Aufgrund des Verlaufes der Wandabschnitte 45 werden beim händischen Einschieben einer Kassette zwischen den Wandabschnitten und den in ihre mit 40a bezeichnete Lage verstellten Stiften 40 keine formschlüssigen, sondern kraftschlüssige lösbare Klemmverbindungen durch die zwischen den Stiften und den Wandabschnitten auftretenden Reibungskräfte gebildet.

Die kraftschlüssigen Klemmverbindungen sind auf einfache Weise dadurch wieder lösbar, dass die Antriebshebel 22 vom Motor 27 her über das Getriebe 26 angetrieben werden, wobei dann die kreisbogenförmigen Wandabschnitte 45 unter Uberwindung der Reibungskräfte zwischen ihnen und den Stiften 40 an letzteren gleitend verstellt werden. Aus diesem Grunde ist bei diesem Gerät der Fühler 53 des Mikroschalters 52 so an der Kassettenaufnahme 5 angeordnet, dass beim Erreichen ihrer Einschublage 3b eine händisch eingeschobene Kassette 3 den Fühler verstellt, wodurch der Mikroschalter 52 geschlossen wird und ein Schaltsignal abgibt, das unmittelbar der Verstärkerschaltung 56 zum Einschalten des Motors 27 zugeführt wird. Sobald eine Kassette 3 ihre Einschublage 3b erreicht, wird auf diese Weise der Motor 27 eingeschaltet, wonach der Motor über das zum Teil nur schematisch mit einer strichpunktierten Linie angedeutete Getriebe 26 die Antriebshebel 22 zum motorischen Einziehen einer Kassette in die Kassettenaufnahme und zum Absenken der Kassettenaufnahme in ihre Arbeitsposition verstellt. Sobald die Kassettenaufnahme 5 ihre Arbeitsposition erreicht hat, betätigt dieselbe beispielsweise einen nicht dargestellten Schalter, der ein Signal zum Stillsetzen des Motors 27 liefert.

Wenn bei dem Gerät gemäss Fig. 3 der Benützer desselben vergessen hat, das Gerät überhaupt einzuschalten, dann gibt der Mikroschalter 52 bei Erreichen der Einschublage 3b der Kassette kein Schaltsignal ab, so dass der Motor 27 nicht eingeschaltet wird, um die Kassette motorisch in die Kassettenaufnahme einzuziehen. Wenn dann der Benützer versucht, durch heftiges Nachdrükken auf die Kassette den Vorgang des motorischen Einziehens auszulösen, werden die hierbei auftretenden relativ grossen Kräfte analog wie bei den vorstehend beschriebenen Geräten von den über die kraftschlüssigen lösbaren Klemmverbindungen zwischen den Stiften 40 und den Wandabschnitten 45 gegen Verschwenken blockierten Antriebshebeln 22 aufgenommen, so dass auch bei diesem Gerät das Getriebe in einfacher Weise sicher vor Uberlastungen geschützt ist.

Beim Gerät gemäss Fig. 4 ist die Kassettenaufnahme 5 unmittelbar von den Chassisplatten 14 getragen, also im Gerät unverstellbar angeordnet. Die Antriebshebel 22 sind hierbei auch unmittelbar an den Chassisplatten 14 zwischen zwei Begrenzungsanschlägen 59 und 60 schwenkbar gelagert. Wenn die Antriebshebel 22 an den Begrenzungsanschlägen 59 anliegen, dann nehmen die Bügel 15 ihre Ausgangslage ein. Beim motorischen Antreiben der Antriebshebel 22 wird eine mit den Bügeln 15 gekoppelte Kassette in die feststehende Kassettenaufnahme eingezogen. Sobald die Antriebshebel 22 an den Begrenzungsanschlägen 60 anliegen, haben die Bügel 15 ihre Betriebslage erreicht, wonach der Motor zum Antreiben der Antriebshebel abgeschaltet wird. Danach können nicht dargestellte geräteseitige Antriebseinrichtungen und Abtasteinrichtungen zum Antreiben und Abtasten des in der Kassette enthaltenen Aufzeichnungsträgers entgegen der Richtung des Pfeiles 6 zur Kassette hin angehoben werden, um mit dem Aufzeichnungsträger in Wirkverbindung zu treten.

Bei diesem Gerät sind die Langlöcher 39 der Stift-Langloch-Verbindungen 21 in den Stegwänden 16 der Bügel 15 vorgesehen, wobei die Längswände 42 und 43 der Langlöcher 39 quer zur Einschubrichtung 4 verlaufen. Die Stifte 40 der Stift-Langloch-Verbindungen 21 sind an den Antriebshebeln 22 angebracht und ragen durch in diesem Falle kreisbogenförmige koaxial zu den Achsen der Schwenklager 23 der Antriebshebel 22 verlaufende Durchbrüche 41 in den Seitenwänden 9 der Kassettenaufnahme 5, um mit den Langlöchern 39 zusammenwirken zu können. Beim motorischen Antreiben der Antriebshebel 22 zum Verstellen der Bügel 15 von ihrer Ausgangslage in ihre Betriebslage wirken die Stifte 40 bei diesem Gerät mit den in Einschubrichtung 4 vorne liegenden Längswänden 43 der Langlöcher 39 zusammen. In den gegenüberliegenden, in Einschubrichtung hinten liegenden Längswänden 42 sind die in der Einschubrichtung verlaufenden Vertiefungen 44 vorgesehen, die bei in ihrer Ausgangslage befindlichen Bügeln 15 den Stiften 40 gegenüberliegen.

Beim händischen Einschieben einer Kassette werden auch bei diesem Gerät die Bügel 15 mitverstellt, wobei die Stifte 40 in den Vertiefungen 44 der hierbei in ihre mit 39a bezeichnete Lage verstellten Langlöcher 39 eintreten. Dabei stossen die Stifte 40 gegen die in Einschubrichtung hinteren Wandabschnitte 61 der Vertiefungen 44, wodurch über die Stifte 40 die Antriebshebel 22 geringfügig in Richtung des Pfeiles 57 verschwenkt werden, bis die Stifte 40 an den Wandabschnitten 62 anstossen, die in der Einschubrichtung 4 verlaufen, und sich zur Bildung einer formschlüssigen lösbaren Klemmverbindung an denselben abstützen. Durch diese Klemmverbindungen sind die Antriebshebel 22 beim händischen Einschieben einer Kassette sicher gegen Verschwenken blockiert, wodurch das Getriebe sicher vor Uberlastungen geschützt ist.

Zum Lösen der beim händischen Einschieben einer Kassette gebildeten formschlüssigen Klemmverbindungen zwischen den Stiften 40 und den Wandabschnitten 62 sind bei diesem Gerät zwei Zugfedern 63 vorgesehen, die je an einem, von einer Deckenwand 18 eines Bügels 15 abstehenden, durch einen Durchbruch 64 in der Deckenwand 8 der Kassettenaufnahme 5 hindurchragenden Lappen 65 und einen von der Deckenwand 8 der Kassettenaufnahme 5 abstehenden Lappen 66 eingehängt ist. Die Zugfedern ziehen nach dem Loslassen einer zuvor bis in ihre Einschublage 3b händisch eingeschobene Kassette die Bügel 15 samt der mit ihnen gekoppelten Kassette entgegen der Einschubrichtung 4 zurück, wobei die Stifte 40 wieder aus den Vertiefungen 44 heraustreten und die Klemmverbindungen zwischen den Stiften 44 und den Wandabschnitten 62 gelöst werden. Erst nach dem Loslassen der Kassette und dem Zurückverstellen der Bügel 15 wird der Mikroschalter 52 wieder geöffnet und das von ihm abgegebene Schaltsignal beendet, wonach der nicht dargestellte Mikroprozessor analog wie beim Gerät gemäss Fig. 1 den Motor 27 zum motorischen Einziehen einer Kassette einschaltet.

Beispielsweise kann die Kassettenaufnahme anstelle einer schachtförmigen Ausbildung auch im wesentlichen zwei feststehende Chassisplatten aufweisen, zwischen denen ein einziger schachtförmiger Träger für eine Kassette verstellbar angeordnet ist. Hierbei kann dann der Antrieb des Trägers mit nur einem Antriebshebel erfolgen, wobei die zwischen dem Träger und dem Antriebshebel vorgesehene Stift-Langloch-Verbindung beispielsweise im Bereich der Bodenwand des Trägers angeordnet ist und einen von der Bodenwand senkrecht abstehenden Stift und ein in einem parallel zur Bodenwand verschwenkbar angeordneten Antriebshebel vorgesehenes Langloch aufweist. Auch kann ein schachtförmiger Träger zwischen zwei feststehenden Chassisplatten verstellbar geführt sein, wobei in den Chassisplatten im wesentlichen L-förmig verlaufende Führungen vorgesehen sind, die den Träger aufeinanderfolgend in der Einschubrichtung und senkrecht hierzu führen, wobei dann an jeder Chassisplatte ein Antriebshebel vorgesehen sein kann, und die beiden Antriebshebel über je eine Stift-Langloch-Verbindung mit den Seitenwänden des Trägers in Antriebsverbindung stehen.

**Patentansprüche**

1. Aufzeichnungs- und/oder Wiedergabegerät für einen in einer Kassette untergebrachten Aufzeichnungsträger mit einer Kassettenaufnahme (5), in die eine Kassette (3) in einer Einschubrichtung (4) händisch einschiebbar ist und die mindestens einen zumindest teilweise in der Einschubrichtung von einer Ausgangslage in eine Betriebslage verstellbaren Träger (15) zum Halten einer Kassette aufweist, mit dem im wesentlichen in seiner Ausgangslage eine Kassette beim händischen Einschieben derselben bis in eine durch mindestens einen Kopplungsanschlag (19) am Träger festgelegte Einschublage koppelbar ist und der zu seiner Verstellung und der mit ihm gekoppelten Kassette über eine Stift-Langloch-Verbindung (21) mit einem verschwenkbaren Antriebshebel (22) in Antriebsverbindung steht, der seinerseits über ein Getriebe (26) von einem Motor (27) her antreibbar ist, wobei beim motorischen Antreiben des Antriebshebels (22) zum Verstellen des Trägers von seiner Ausgangslage in seine Betriebslage eine (42) der beiden Längswände (42, 43) des Langloches (39) der Stift-Langloch-Verbindung mit dem Stift (40) derselben zusammenwirkt, dadurch gekennzeichnet, dass das Langloch (39) in der Längswand (43), die der beim motorischen Antreiben des Antriebshebels (22) zum Verstellen des Trägers (15) von seiner Ausgangslage in seine Betriebslage mit dem Stift (40) zusammenwirkenden Längswand (42) gegenüberliegt, eine im wesentlichen in der Einschubrichtung verlaufende Vertiefung (44) aufweist und bei in seiner Ausgangslage befindlichem Träger die Vertiefung und der Stift (40) in der Einschubrichtung einander gegenüber liegen, wobei beim Koppeln einer Kassette (3) mit dem Träger (15) beim händischen Einschieben derselben bis in ihre Einschublage der Stift (40) in die Vertiefung (44) eintritt und sich zur Bildung einer lösbaren Klemmverbindung mit einem Wandabschnitt (45) derselben zur Blockierung einer Schwenkbewegung des Antriebshebels verklemmt.

2. Gerät nach Anspruch 1, dadurch gekennzeichnet, dass eine zumindest beim Koppeln einer Kassette (3) mit dem Träger (15) beim händischen Einschieben derselben bis in ihre Einschublage auf den Träger im wesentlichen entgegen der Einschubrichtung einwirkende Federeinrichtung (50) vorgesehen ist, die nach dem Loslassen der zuvor händisch bis in ihre Einschublage eingeschobenen, mit dem Träger gekoppelten Kassette zum Lösen der Klemmverbindung zwischen dem Stift (40) und dem Wandabschnitt (45) der Vertiefung (44) den Träger entgegen, der Einschubrichtung zurückverstellt, wobei der Stift von dem Wandabschnitt der Vertiefung abhebt.

3. Gerät nach Anspruch 2, dadurch gekennzeichnet, dass die Stift-Langloch-Verbindung zwischen dem Antriebshebel (22) und einem am Träger (15) im wesentlichen in der Einschubrichtung verstellbar gehaltenen Zwischenteil (47) vorgesehen ist, an dem als Federeinrichtung eine zwischen ihm (47) und dem Träger (15) wirksame Feder (50) angreift, die den Zwischenteil in der Einschubrichtung belastet und bei in seiner Ausgangslage befindlichem Träger in einen ersten am Träger vorgesehenen Begrenzungsanschlag (48) angelegt hält, wobei beim Koppeln einer Kassette (3) mit dem Träger (15) beim händischen Einschieben derselben bis in ihre Einschublage der erste Begrenzungsanschlag (48) entgegen der Kraft der Feder (50) von dem über die Klemmverbindung festgehaltenen Zwischenteil (47) angehoben wird und sich ein zweiter am Träger vorgesehener Begrenzungsanschlag (49) an dem Zwischenteil (47) abstützt und nach dem Loslassen der bis in ihre Einschublage eingeschobenen Kassette die Feder den ersten Begrenzungsanschlag (48) wieder am Zwischenteil zum Anliegen bringt.

4. Gerät nach Anspruch 2 oder 3, bei dem an der Kassettenaufnahme eine von einer in dieselbe eingeschobene Kassette (3) auslösbare Schalteinrichtung (52) zur Abgabe eines Schaltsignales bei bis in ihre Einschublage eingeschobener Kassette vorgesehen ist, an die eine Steuerschaltung (54) zum Einschalten des Motors (27) angeschlossen ist, dadurch gekennzeichnet, dass nach dem Loslassen der bis in ihre Einschublage eingeschobenen Kassette (3) und dem mit der Kraft der Federeinrichtung (50) erfolgenden Zurückverstellen des Trägers die Schalteinrichtung (54) die Abgabe des Schaltsignales beendet und dass die an die Schalteinrichtung angeschlossene Steuerschaltung das Ende des Schaltsignales detektiert und danach den Motor (17) einschaltet.

**Revendications**

1. Appareil d'enregistrement et/ou de reproduction pour un support d'enregistrement logé dans une cassette comportant un compartiment à cassette (5), dans lequel une cassette (3) peut être insérée à la main dans une direction d'insertion (4) et qui présente au moins un support (15), destiné à retenir une cassette, déplaçable au moins partiellement dans la direction d'insertion à partir d'une position initiale vers une position de fonctionnement et auquel, essentiellement dans sa position initiale, une cassette peut être couplée, lors de son insertion manuelle jusqu'à une position d'insertion proprement dite fixée par au moins une butée de couplage (19) prévue sur ce support qui, en vue de son déplacement et de celui de la cassette qui y est couplée est en liaison d'entraînement, par l'intermédiaire d'une liaison à ergot et boutonnière (21), avec un levier d'entraînement pivotant (22) qui, pour sa part, peut être entraîné par un moteur (27) par l'intermédiaire d'un mécanisme de transmission (26), étant entendu que lors de l'entraînement motorisé du levier d'entraînement (22) en vue du déplacement du support de sa position initiale vers sa position de fonctionnement, un (42) des deux bords longitudinaux (42, 43) de la boutonnière (39) de la liaison à ergot et boutonnière coopère avec l'ergot (40) de celle-ci, caractérisé en ce que la boutonnière (39) présente, dans son bord longitudinal (43) qui, lors de l'entraînement motorisé du levier d'entraînement (22) en vue du déplacement du support (15) de sa position initiale vers sa position de fonctionnement, est opposée au bord longitudinal coopérant avec l'ergot, un dégagement (44) s'étendant essentiellement dans la direction d'insertion et, lorsque le support se trouve dans sa position initiale, le dégagement (44) et l'ergot (40) se font face dans la direction d'insertion, de sorte que, au moment du couplage d'une cassette (3) au support (15), lors de l'insertion manuelle de celle-ci jusque dans sa position d'insertion proprement dite, l'ergot (40) pénètre dans le dégagement (44) et se cale contre une section de bord (45) de ce dégagement de manière à former une liaison de calage libérable en vue de bloquer le mouvement de pivotement du levier d'entraînement.

2. Appareil suivant la revendication 1, caractérisé en ce qu'un dispositif à ressort (50) agissant sur le support en substance dans un sens opposé à la direction d'insertion, au moins lors du couplage d'une cassette (3) au support (15), lors de l'insertion manuelle de celle-ci jusque dans sa position d'insertion proprement dite, est prévu, et ce dispositif à ressort, après le lâchage d'une cassette couplée au support, précédemment insérée manuellement jusque dans sa position d'insertion proprement dite, rappelle le support dans un sens opposé à la direction d'insertion, pour libérer la liaison de calage entre l'ergot (40) et la section de bord (45) du dégagement (44), de sorte que l'ergot s'écarte de cette section de bord du dégagement.

3. Appareil suivant la revendication 2, caractérisé en ce que la liaison à ergot et boutonnière est prévue entre le levier d'entraînement (22) et un élément intermédiaire (47) maintenu mobile sur le support (15) essentiellement dans la direction d'insertion et sur lequel, à titre de dispositif à ressort, agit un ressort (50) opérant entre cet élément (47) et le support (15), pour rappeler l'élément intermédiaire dans la direction d'insertion et, lorsque le support se trouve dans sa position de départ, pour le maintenir appliqué contre une première butée de limitation (48) prévue sur le support, de sorte que, lors du couplage d'une cassette (3) au support (15), au moment de l'insertion manuelle de celleci jusque dans sa position d'insertion proprement dite, la première butée de limitation (48) est écartée, à l'encontre de la sollicitation du ressort (50), de l'élément intermédiaire (47) immobilisé par la liaison de calage et une deuxième butée de limitation (49) prévue sur le support porte contre l'élément intermédiaire (47) et, apres le lâchage de la cassette insérée jusque dans sa position d'insertion, le ressort ramène la première butée de limitation (48) à nouveau contre l'élément intermédiaire.

4. Appareil suivant la revendication 2 ou 3, dans lequel, dans le compartiment à cassette, est prévu un dispositif de commutation qui peut être déclenché (52) par une cassette (3) insérée dans ce compartiment pour produire un signal de commutation lorsqu'une cassette est insérée jusque dans la position d'insertion proprement dite, et auquel est connecté un circuit de commande (54) pour l'enclenchement du fonctionnement du moteur (27), caractérisé en ce qu'après le lâchage de la cassette (3) insérée jusque dans sa position d'insertion et après le retour en position initiale du support qui s'effectue sous la force du dispositif à ressort (50), le dispositif de commutation (54) fait cesser l'émission du signal de commutation et le circuit de commande connecté au dispositif de commutation détecte la fin du signal de commutation et enclenche ensuite le fonctionnement du moteur (17).

**Claims**

1. A recording and/or reproducing apparatus for a record carrier accommodated in a cassette, comprising a cassette receptacle (5) into which a cassette (3) can be inserted by hand in a direction of insertion (4) and which comprises at least one retaining member (15) for retaining a cassette, which member is movable from an initial position into an operating position at least partly in the direction of insertion and, when it is substantially in its initial position, can be coupled to a cassette inserted by hand up to an insertion position defined by a coupling stop (19) on the retaining member, which member has a drive connection with a pivotable drive lever (22) via a pin-slot linkage (21) to move the member and the cassette coupled thereto, which lever can be driven by a motor (27) via a drive mechanism (26), one of the two longitudinal walls (42, 43) of the slot (39) of the pin-slot linkage cooperating with the pin (40) of said linkage when the drive lever (22) is driven by the motor, to move the member from its initial position to this operating position, characterized in that the longitudinal wall (43) of the slot (39) opposite the longitudinal wall (42) which cooperates with the pin (40) when the drive lever (22) is driven by the motor to move the retaining member (15) from its initial position into its operating position has a recess (44) which extends substantially in the direction of insertion, the recess and the pin (40) being situated opposite one another in the direction of insertion when the retaining member is in its initial position, the pin (40) engaging the recess (44) when a cassette (3) is coupled to the member (15) during manual insertion of the cassette up to its insertion position and being clamped against a wall portion (45) of said recess to form a detachable clamped connection for blocking a pivotal movement of the drive lever.

2. An apparatus as claimed in Claim 1, characterized in that there is provided a spring means (50) which, at least when a cassette (3) is coupled to the retaining member (15) during manual insertion of the cassette up to its insertion position, acts on the retaining member in a direction substantially opposite to the direction of insertion and which after the release of a cassette which has been inserted manually up to its insertion position and which is coupled to the member, moves the member back in a direction opposite to direction of insertion to release the clamped connection between the pin (40) and the wall portion (45) of the recess (44), causing the pin be lifted off the wall portion of the recess.

3. An apparatus as claimed in Claim 2, characterized in that the pin-slot linkage is arranged between the drive lever (22) and an intermediate part (47) which is mounted on the retaining member (15) to be movable substantially in the direction of insertion and which cooperates with a spring means in the form of a spring (50) which acts between said intermediate part (47) and the retaining member (15), which spring urges the intermediate part in the direction of insertion and, when the retaining member is in its initial position, keeps said part against a first limiting stop (48) on the member, whilst when a cassette (3) is coupled to the member (15) during manual insertion of said cassette up to its insertion position the first limiting stop (48) is lifted off the intermediate part (47) against the spring (50) force, which intermediate part is retained via the clamped connection, and a second limiting stop (49) on the retaining member abuts against the intermediate part (47) and, after the release of the cassette which has been inserted up to its insertion position, the spring again urges the first limiting stop (48) against the intermediate part.

4. An apparatus as claimed in Claim 2 or 3, in which the cassette receptacle is provided with a switching device (52) which is connected to a control circuit (54) for switching on the motor (27) and which can be actuated by a cassette (3) inserted into said receptacle, to supply a switching signal when the cassette has reached its insertion position, characterized in that after the release of a cassette (3) which has been inserted up to its insertion position and after the return movement of the retaining member under the influence of the force exerted by the spring means (50), the switching device (54) terminates the supply of switching signals and the control circuit, which is connected to the switching device, detects the end of the switching signal and subsequently starts the motor (17).

Fig.1

Fig.2

1

Fig.3

Fig.4